# EUROPEAN PATENT SPECIFICATION

(11) **EP 2 644 032 B1**
(45) Date of publication and mention of the grant of the patent: **20.11.2019**
(21) Application number: 13160856.4
(22) Date of filing: 25.03.2013
(51) Int. Cl.: A23L 7/109, A23L 5/41

(54) **Frozen gyoza and refrigerated gyoza with browning agent, and method for producing the same**
Gefrorenes Gyoza und gekühltes Gyoza mit Bräunungsmittel, und Verfahren zur Herstellung davon
Gyoza surgelés et réfrigérés avec agent de brunissement et son procédé de production

(30) Priority: 30.03.2012 JP 2012082022
(43) Date of publication of application: 02.10.2013
(73) Proprietor: AJINOMOTO CO., INC., Tokyo-to, Tokyo (JP)
(72) Inventor: Hirae, Shogo, Oaza Yoshida, 1210-5 (JP); Imaizumi, Keisuke, Oaza Yoshida, 1210-5 (JP); Tamaigo, Tomomi, Oaza Yoshida, 1210-5 (JP); Shitara, Nobuhiro, Oaza Yoshida, 1210-5 (JP)
(74) Representative: Strehl Schübel-Hopf & Partner

(56) References cited:
- JP-A- 2008 125 385
- JP-A- 2009 165 388
- JP-B2- 2 850 690
- JP-B2- 4 483 268

## Description

### [Technical Field]

The present invention relates to a method for producing a frozen gyoza and refrigerated gyoza with a browning agent, and a frozen gyoza and refrigerated gyoza obtainable by said method.

### [Background Art]

As for a usual method for cooking gyoza, uncooked or steamed gyoza dumplings, or frozen or refrigerated uncooked or steamed gyoza dumplings are arranged in an iron pot or the like with an oil covering the bottom thereof and then steam-baked. However, according to this method, the number of gyoza dumplings which can be cooked at one time is limited, and therefore, it is difficult to cook a large number of gyoza dumplings in a short time and also there is a problem that skill is required for nicely browning a surface of gyoza. There is also a problem that after completion of the cooking, the browned surface becomes soft over time and the crisp texture and savory flavor immediately after cooking are significantly deteriorated.

Therefore, a method for producing gyoza, which enables anybody to cook a large amount of gyoza easily, and also achieves uniform browning of a surface to be browned of gyoza and enables the production of gyoza having a texture and a savory flavor close to those immediately after cooking by attaching an emulsion having a specific composition to a surface to be browned of gyoza, followed by steam-baking, was developed (Patent Document 1). Patent Document 1 describes frozen dumplings capable of keeping crisp palatability, taste and flavor of fried surface and having uniform baked color by applying an emulsified batter before cooking, the batter comprising water, oil, emulsifier, cereal flour, protein
and seasoning at ratios water : oil : emulsifier : cereal flour : protein : seasoning of (40-65 %) : (30-50 %) : (0.1-2 %) : (5-30 %) : (0.3-3 %) : (0.1-5 %). Further, a study of the composition of the emulsion to be attached was further advanced, and a technique for preventing individual gyoza dumplings from being out of position during transportation, etc. were also developed (Patent Document 2). Patent Document 2 describes frozen or chilled jiaozis, coated with an emulsified batter comprising:
(a) 50 to 80 wt. %, based on the total weight of said batter, of water;
(b) 5 to 30 wt. %, based on the total weight of said batter, of one or more oils;
(c) 0.6 to 8 wt. %, based on the total weight of said batter, of one or more emulsifiers;
(d) 6 to 10 wt. %, based on the total weight of said batter, of one or more starches; and
(e) 0.1 to 0.7 wt. %, based on the total weight of said batter, of one or more proteins.

However, according to these methods, after cooking, burnt debris remains in a frying pan or the like, or an unbaked portion remains on gyoza in some cases, and further, depending on the composition of a browning agent or the production method, the texture of the resulting gyoza is not favorable in some cases, and therefore, further improvement of the quality of gyoza has been demanded.
JP2009165388A describes frozen Chinese dumplings coated with a batter comprising water, flour, oil and emulsifier In example 1, the batter comprises 80% water, 9% flour, 10% oil and 1% emulsifier (soy lecithin). JP2008125385A describes frozen Chinese dumplings covered with a non-emulsified browning liquid comprising water, oil and milk protein. Moreover, a starch and an emulsifier can be mixed with these components. The evaluation of the quality of the baked product gives: food texture: 5 and baked color: 5

### [Prior Art Documents]

### [Patent Documents]

[Patent Document 1] Japanese Patent No. 2850690
[Patent Document 2] Japanese Patent No. 4483268

### [Summary of the Invention]

### [Problems that the Invention is to Solve]

An object of the invention is to provide a method for producing a frozen or refrigerated gyoza with a browning agent, and also to provide a frozen or refrigerated gyoza, which is obtainable by said method and which reduces burnt debris generated when cooking the gyoza by steam-baking, prevents the occurrence of an unbaked portion of the browning agent, and also has a browned surface with a favorable texture.

### [Means for Solving the Problems]

The present inventors analyzed the structure of a browning agent of frozen gyoza after steam-heating, and as a result, they found that the net-like structure of the browning agent and the quality of the gyoza are associated with each other. Further, they found that by preparing the browning agent using the number of connection points in the net-like structure per unit area (mm²) (a structure value A) of the fine
net-like structure seen in a frozen section of the browning agent and the sum of the lengths of center lines of structural bodies of the net-like structure per unit area (mm²) (a structure value B) as indices, the quality of frozen gyoza can be significantly improved. The invention is based on these findings.

That is, according to the invention, the following inventions are provided.
[1] A method for producing frozen or refrigerated gyoza with a browning agent, characterized in that a browning agent is prepared using the number of connection points in the net-like structure per unit area (mm²) (a structure value A) of the browning agent and the sum of the lengths of center lines of structural bodies of the net-like structure per unit area (mm²) (a structure value B) of the browning agent as indices, wherein the browning agent is prepared such that the structure value A of the browning agent when the thickness of a section of the browning agent is set to 20 µm is from 20 to 90 (points/mm²) and the structure value B of the browning agent when the thickness of a section of the browning agent is set to 20 µm is 30 (mm/mm²) or less,
   wherein the browning agent contains, based on the amount of the batter, 10 to 99% by weight of water, 0 to 90% by weight of oil, 0.01 to 10% by weight of emulsifier, and 0 to 70% by weight of starch, and 0 to 20% by weight of protein,
   wherein the method comprises the steps of mixing the ingredients of a browning agent, steam-heating uncooked gyoza to which the browning agent has been attached and quickly freezing or refrigerating, respectively, the steam-heated product, and comprising adjusting the composition of the ingredients of the browning agent, the stirring intensity and the temperature when mixing the ingredients of the browning agent, the ratio of water and oil in the browning agent, the steam-heating time and steam-heating temperature for the gyoza to which the browning agent has been attached.
[2] Frozen or refrigerated gyoza with a browning agent, obtainable by the production method according to [1], characterized in that the number of connection points in the net-like structure per unit area (mm²) (a structure value A) of the browning agent when the thickness of a section of the browning agent is set to 20 µm is from 20 to 90, and the sum of the lengths of center lines of structural bodies of the net-like structure per unit area (mm²) (a structure value B) of the browning agent when the thickness of a section of the browning agent is set to 20 µm is 30 mm or less.

According to the method for producing frozen or refrigerated gyoza with a browning agent of the invention, frozen or refrigerated gyoza having an improved quality can be produced by preparing a browning agent using a net-like structure of the browning agent formed on the gyoza as an index. Further, the frozen gyoza and refrigerated gyoza with a browning agent of the invention are frozen gyoza and refrigerated gyoza with a browning agent, which reduce burnt debris generated when cooking the gyoza by steam-baking, prevent the occurrence of an unbaked portion of the browning agent, and also form a browned surface with a favorable texture when cooking the gyoza by steam-baking, and therefore have a high quality.

### [Brief Description of the Drawings]

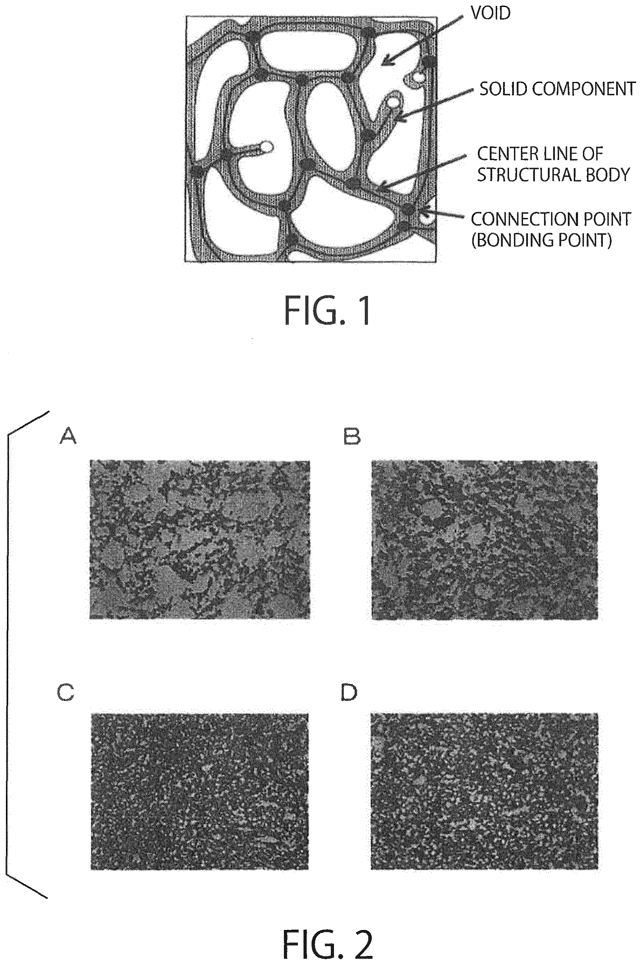

[Fig. 1] Fig. 1 is a schematic diagram of a fine net-like structure of a browning agent formed on a surface of frozen gyoza with the browning agent.
[Figs. 2A to 2D] Figs. 2A to 2D are views showing microscopically enlarged photographs of frozen sections of browning agents prepared in Examples. Fig. 2A shows a microscopically enlarged view of a net-like structure of a frozen section of a browning agent when a browning agent prepared under the conditions of an experimental group 26 was used; Fig. 2B shows a microscopically enlarged view of a net-like structure of a frozen section of a browning agent when a browning agent prepared under the conditions of an experimental group 27 was used; Fig. 2C shows a microscopically enlarged view of a net-like structure of a frozen section of a browning agent when a browning agent prepared under the conditions of an experimental group 30 was used; and Fig. 2D shows a microscopically enlarged view of a net-like structure of a frozen section of a browning agent when a browning agent prepared under the conditions of an experimental group 23 was used.

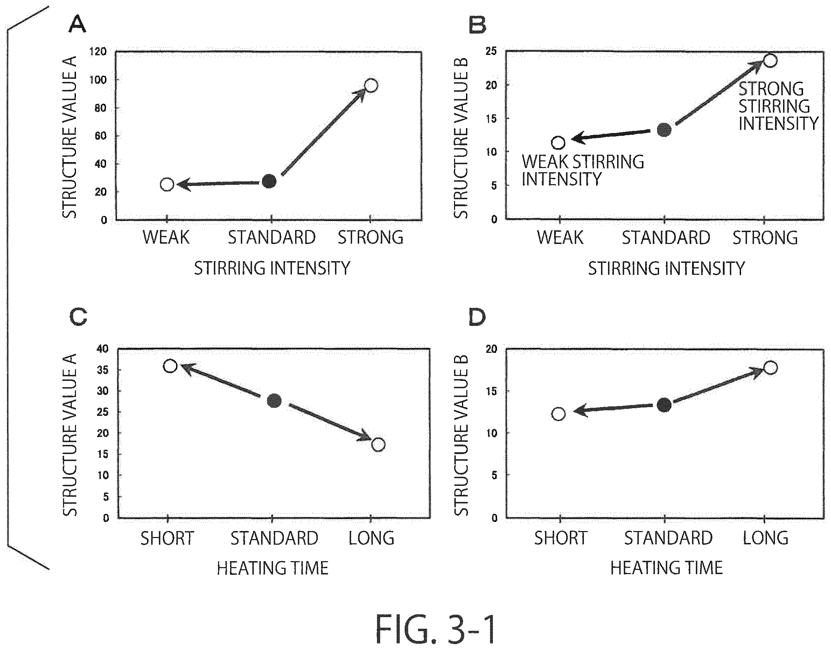

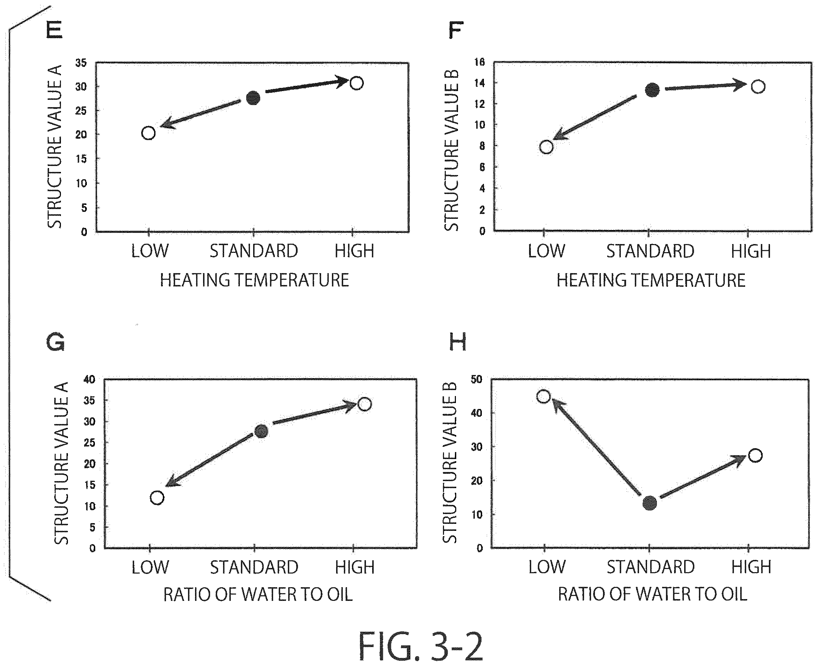

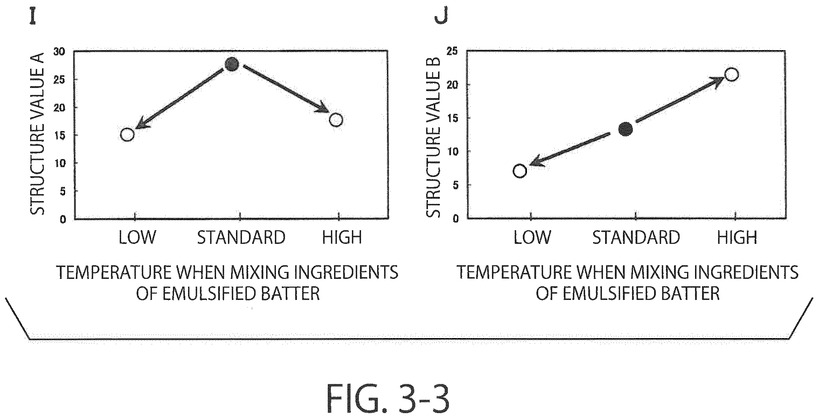

[Figs. 3A to 3J] Figs. 3A to 3J are views showing a relationship between a structure value A or B of a net-like structure of a browning agent and a preparation condition for the browning agent or a steam-heating condition for gyoza. Figs. 3A and 3B are views showing an effect of a change in stirring condition when preparing the browning agent on structure values A and B, respectively; Figs. 3C and 3D are views showing an effect of a change in steam-heating time for gyoza on the structure values A and B, respectively; Figs. 3E and 3F are views showing an effect of a change in steam-heating temperature for gyoza on the structure values A and B, respectively; Figs. 3G and 3H are views showing an effect of a change in weight ratio of water to oil in the browning agent on the structure values A and B, respectively; and Figs. 3I and 3J are views showing an effect of a change in temperature when mixing ingredients of the browning agent on the structure values A and B, respectively.

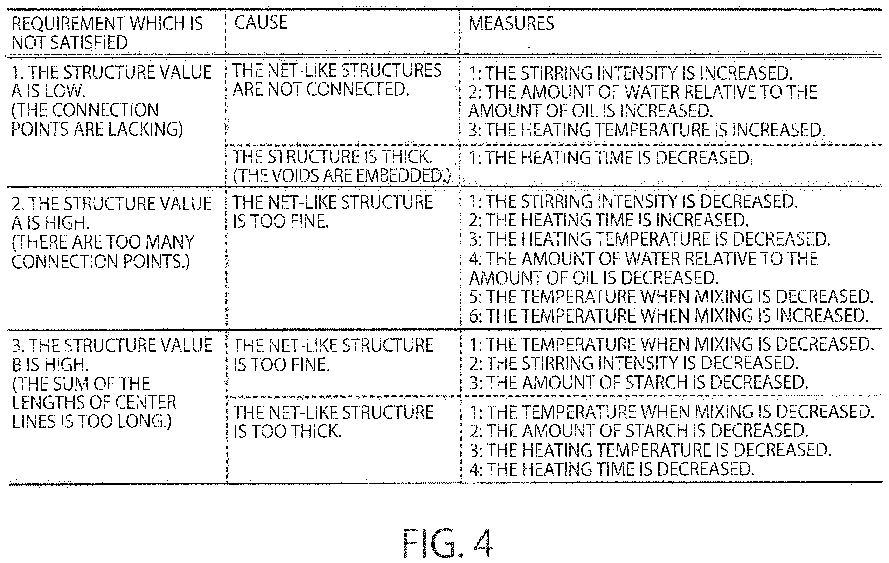

[Fig. 4] Fig. 4 is a view showing what measures can be taken when the structure value A or B of a browning agent of prepared gyoza is outside a predetermined numerical range along with the cause thereof.

### [Detailed Description of the Invention]

### Evaluation of Net-Like Structure of Browning Agent

As described in the following Examples, the present inventors found that a browning agent attached to a gyoza main body forms a net-like structure (see Fig. 1), and also found that by preparing frozen gyoza such that the browning agent forms a specific net-like structure, the quality of frozen gyoza can be improved (in other words, burnt debris generated when cooking the gyoza by steam-baking can be reduced, the occurrence of an unbaked portion of the browning agent can be prevented, and a browned surface with a favorable texture when cooking the gyoza by steam-baking can be formed). That is, the method for producing frozen or refrigerated gyoza with a browning agent of the invention is characterized in that a browning agent is prepared using the net-like structure of the browning agent formed on a surface of frozen or refrigerated gyoza as an index.

As the net-like structure to be used as the index, the number of connection points in the net-like structure per unit area (mm²) of the net-like structure (a structure value A) and the sum of the lengths of center lines of structural bodies of the net-like structure per unit area (mm²) (a structure value B) are used. Here, the structure value A corresponds to the number of connection points (bonding points) per unit area (points/mm²) in Fig. 1, and the structure value B corresponds to the sum of the lengths (mm) of center lines of structural bodies per unit area in Fig. 1. In the invention, by adjusting the structure value A and/or the structure value B to a specific value, the quality of frozen or refrigerated gyoza can be improved.

The net-like structure of the browning agent can be observed, for example, as follows. First, the browning agent formed on the gyoza main body is transformed into a frozen state, and the frozen browning agent is cut into a section with an appropriate size (for example, 1 cm square). Then, the section is fixed by being impregnated with a fixative solution (for example, a Ufix solution manufactured by Sakura Finetek Co., Ltd.) whose temperature is adjusted to -25°C. Thereafter, the fixed frozen section is degreased by being immersed in hexane at -25°C. Subsequently, the degreased section is immersed in a 10% sucrose solution at 4°C, and then immersed in a 20% sucrose solution. The sucrose solution to be used at this time preferably contains a 1% iodine solution for coloring. Thereafter, the section is embedded in 4% carboxymethyl cellulose, frozen at -25°C, and then cut into a section with a thickness of 20 µm using a microtome. After the thus obtained section is air-dried on a slide glass, the observation of the section can be performed using a light microscope.

The structure values A and B which can be used as the indices in the invention can be obtained by, for example, scanning an enlarged image of the frozen section obtained by a light microscope into a computer, and analyzing the scanned image by the computer, followed by calculation. Prior to the analysis, it is preferred to binarize the image scanned into the computer to black and white, and the binarized parameters can be appropriately set by those skilled in the art. In addition, after the binarization, processing such as noise removal can be further performed.

The structure values A and B may be obtained by an image analysis using trabecular bone structure analysis software. As the trabecular bone structure analysis software, any software may be used as long as it is a commercially available one, however, for example, the structure values A and B can be obtained using an algorithm of 2-D bone analysis of the trabecular bone structure analysis according to the manufacturer's manual. As the algorithm of 2-D bone analysis of the trabecular bone structure analysis, an algorithm based on the node-strut method (Uchiyama et al., "Method for Evaluating Trabecular Structure in Bone Tissue Morphometry", J. Jpn. Soc. Bone Morphom., vol. 4, pp. 83-89, 1994) can be used.

In the production method of the invention, by preparing the browning agent so as to form a browning agent which has a structure value A (points/mm²) in a range of from 20 to 90 (preferably in a range of from 20 to 80, more preferably from 22 to 70) when the thickness of a section of the browning agent is set to 20 µm, the quality of frozen or refrigerated gyoza can be improved. The structure value A can be calculated from a frozen section of the browning agent as described above.

In the production method of the invention, by preparing the browning agent so as to form a browning agent which has a structure value B (mm/mm²) of 30 or less (preferably in a range of from 5 to 30, more preferably from 8 to 30) when the thickness of a section of the browning agent is set to 20 µm, the quality of frozen or refrigerated gyoza can be improved. The structure value B can be calculated from a frozen section of the browning agent as described above.

In the production method of the invention, the browning agent is prepared using both of the structure values A and B of the browning agent when the thickness of a section of the browning agent is set to 20 µm as indices. Therefore,
a browning agent is prepared so as to form a browning agent which has a structure value A of from 20 to 90 when the thickness of a section of the browning agent is set to 20 µm and has a structure value B of 30 or less when the thickness of a section of the browning agent is set to 20 µm.
According to this method, the quality of the produced frozen or refrigerated gyoza can be further more improved.

### Preparation of Browning Agent

As described in the following Examples, the present inventors found that by changing the preparation conditions for the browning agent, the structure values A and B can be controlled and also the quality of frozen gyoza can be improved (see Figs. 4). Therefore, in the production method of the invention, the production conditions are determined by changing the preparation conditions for the browning agent using the structure values A and B of the browning agent as indices, and frozen or refrigerated gyoza having an improved quality can be produced. Examples of the preparation conditions which can be changed include a stirring intensity (a stirring speed and a stirring time) when mixing the ingredients of the browning agent, a temperature when mixing the ingredients of the browning agent, the ratio of water to oil to be used as the ingredients of the browning agent, the ratio of the amount of a starch in the ingredients of the browning agent, and steam-heating conditions (a heating temperature and a heating time) after integrating the browning agent and uncooked gyoza with each other.

Specifically, in the case where the structure value A is lower than the numerical range serving as the index, the structure value A can be increased by increasing the stirring intensity, increasing the ratio of water to oil, and/or increasing the heating temperature. Further, in the case where the structure value A is higher than the numerical range serving as the index, the structure value A can be decreased by decreasing the stirring intensity, increasing the heating time, decreasing the heating temperature, decreasing the ratio of water to oil, and/or decreasing or increasing the temperature when mixing the ingredients of the browning agent. Further, in the case where the structure value B is higher than the numerical range serving as the index, the structure value B can be decreased by decreasing the stirring intensity when mixing the ingredients of the browning agent, decreasing the temperature when mixing, decreasing the amount of a starch, decreasing the heating temperature, and/or decreasing the heating time. Further, in the case where the structure value B is lower than the numerical range serving as the index, the structure value B can be increased by increasing the stirring intensity when mixing the ingredients of the browning agent, increasing the temperature when mixing, and/or decreasing the ratio of water to oil. In this manner, in the case where the structure values A and B do not fall within the predetermined numerical ranges, by changing the preparation method for the browning agent such as the composition of the browning agent, the stirring conditions and the temperature conditions when preparing the browning agent, and the steam-heating conditions (the heating temperature and the heating time) after integrating the browning agent and uncooked gyoza with each other, frozen or refrigerated gyoza on which the browning agent having predetermined structure values A and B has been formed can be produced.

Accordingly, the production method of the invention further includes a step selected from the group consisting of:
a) adjusting the composition of the ingredients of the browning agent;
b) adjusting the stirring intensity when mixing the ingredients of the browning agent;
c) adjusting the temperature when mixing the ingredients of the browning agent;
d) adjusting the ratio of water to oil in the browning agent;
e) adjusting the steam-heating time for the browning agent and the gyoza main body; and
f) adjusting the steam-heating temperature for the browning agent and the gyoza main body; and
g) an arbitrary combination of the above a) to f).

According to this, frozen or refrigerated gyoza with a browning agent can be prepared so that the structure values A and B of the browning agent fall within the predetermined numerical ranges, and therefore, frozen or refrigerated gyoza having an improved quality can be produced.

### Production of Frozen Gyoza and Refrigerated Gyoza

The production method of the invention is performed according to a method for producing frozen gyoza with a browning agent or a method for producing refrigerated gyoza with a browning agent, wherein the browning agent is prepared using the net-like structure of the browning agent as an index.

For example, as for the method for producing frozen gyoza of the invention, uncooked gyoza to which a browning agent (for example, a batter) has been attached is steam-heated, and then quickly frozen, whereby frozen gyoza with a browning agent can be produced. In the case where the net-like structure of the browning agent is analyzed, the analysis may be performed after the browning agent is obtained from the frozen gyoza after quick-freezing, or after the browning agent is obtained from the gyoza before quick-freezing, and then transformed into a frozen section.

As for the method for producing refrigerated gyoza of the invention, for example, uncooked gyoza to which a browning agent (for example, a batter) has been attached is steam-heated, and then quickly refrigerated, whereby refrigerated gyoza with a browning agent can be produced. In the case where the net-like structure of the browning agent is analyzed, the analysis can be performed after the browning agent is obtained from the produced refrigerated gyoza, and then transformed into a frozen section.

In the invention, the term "gyoza" is not particularly limited and is used in the sense of including a food obtained by wrapping a filling containing ground pork, minced Chinese cabbage, minced Welsh onion, minced ginger, seasonings, etc., which are mixed with one another, with a dough piece obtained by kneading a cereal flour such as wheat flour to prepare a dough and molding the dough into a disk-shaped piece, followed by heating. Specific examples of the "gyoza" include wild boar gyoza (pork gyoza), chicken gyoza, beef gyoza, mutton gyoza, fish gyoza, shrimp gyoza, and dessert gyoza.

Further, in the invention, the term "frozen gyoza" refers to gyoza in the frozen form obtained by processing so that gyoza can be simply cooked. The frozen gyoza can be cooked by, for example, steam-baking using water and if necessary, a small amount of oil.

Further, in the invention, the term "refrigerated gyoza" is used in the sense of including "chilled gyoza", and refers to gyoza in the refrigerated form obtained by processing so that gyoza can be simply cooked. The refrigerated gyoza can be cooked by, for example, steam-baking using water and if necessary a small amount of oil in the same manner as the frozen gyoza.

In the invention, the "browning agent" formed on a surface of gyoza constitutes a portion of the frozen or refrigerated gyoza of the invention, and in the case where the frozen or refrigerated gyoza is cooked by steam-baking in a frying pan or a hot plate, the browning agent forms a browned surface suitable for baked gyoza on a surface of the gyoza, and also forms a "crispy edge" around the gyoza. That is, by forming the browning agent on a surface of gyoza, the crisp texture of the browned surface and the savory texture when cooking the gyoza can be improved, and also the appearance thereof can be improved.

As the method for attaching the browning agent to gyoza is not particularly limited, however, for example, a method in which gyoza is dipped in the browning agent, a method in which the browning agent is applied to gyoza using a brush or a roller, a method in which the browning agent is applied to gyoza using a sprayer, or the like can be used. Specifically, the method in which gyoza is dipped in the browning agent can be performed by arranging gyoza dumplings in a tray and pouring the browning agent on the bottom of the tray, or by arranging gyoza dumplings in a tray in which the browning agent has been poured. In this case, by arranging the gyoza dumplings in the tray such that a surface to be browned of the gyoza becomes the bottom, the browning agent can be formed on the surface to be browned of the gyoza, and the texture of the browned surface of the gyoza can be further more improved.

In a preferred embodiment, one side of the gyoza is coated with 0.0001 to 0.0040 g/mm², preferably from 0.0001 to 0.0020 g/mm², more preferably from 0.0001 to 0.0010 g/mm², of the browning agent.

In a preferred embodiment, the gyoza has a coating of browning agent in an amount of 0.1 to 30 % by weight, preferably 1 to 10 % by weight, based on the amount of the gyoza having the browning agent.

In a preferred embodiment, a portion of the gyoza has a coating of browning agent having a thickness of 0.1 to 4.0 mm, preferably 0.1 to 2.0 mm, more preferably 0.1 to 1.0 mm.

In the invention, as the browning agent to be attached to a surface of gyoza, a batter can be exemplified, and for example, a material containing water, a starch, and a protein, and if necessary, a cooking oil, an emulsifier, and/or a seasoning can be used as the "batter". Further, the batter may be an emulsified batter, and for example, a material containing water, a cooking oil, an emulsifier, a starch, and a protein, and if necessary, a seasoning can be used as the "emulsified batter". In the case where the batter is used in the production method of the invention, the ingredients of the batter are mixed and stirred to obtain a batter liquid. Then, the obtained batter liquid is attached to a surface of gyoza, and if necessary steam-heating is performed, whereby frozen or refrigerated gyoza with a browning agent can be produced. Incidentally, as described above, by adjusting the composition of the browning agent, adjusting the stirring speed or temperature when mixing the ingredients of the browning agent, or adjusting the steam-heating time or the steam-heating temperature for the browning agent and the gyoza main body, the browning agent formed on a surface of gyoza can be made to have predetermined structure values A and B, and therefore, from these points of view, the composition of the batter or the preparation conditions therefor may be determined.

Water to be used in the batter is blended in an amount of from 10 to 99% by weight, preferably from 30 to 90% by weight based on the amount of the batter.

The cooking oil which can be used in the batter is not particularly limited as long as it is an edible oil, however, examples thereof include canola oil, soybean oil, corn oil, safflower oil, lard, shortening, butter, and palm oil. The cooking oil is blended in an amount of from 0 to 90% by weight, preferably from 0 to 60% by weight based on the amount of the batter. Incidentally, as described above, by adjusting the ratio of water to oil in the browning agent, the browning agent formed on a surface of gyoza can be made to have predetermined structure values A and B, and therefore, from these points of view, the amount of the cooking oil to be used in the batter may be determined.

The emulsifier which is used in the batter is not particularly limited as long as it is edible, however, examples thereof include lecithin, a propylene glycol fatty acid ester, monoglycerol, and a sugar ester. The emulsifier is blended in an amount of from 0.01 to 10% by weight, preferably from 0.1 to 2% by weight based on the amount of the batter.

As the starch which can be used in the batter, a cereal flour is preferably used, and examples thereof include wheat flour, corn flour, barley flour, buckwheat flour, potato flour, soybean flour, red bean flour, barnyard grass flour, foxtail millet flour, and proso millet flour, and particularly, rice flour is more preferably used. In addition, a starch such as tapioca starch, high-amylose starch, potato starch, corn starch, or waxy corn starch, a pregelatinized starch, and a processed starch such as an oxidized starch can also be used. The starch is blended in an amount of from 0 to 70% by weight based on the amount of the batter. The starch is sometimes added when the strength of the browned surface of gyoza is increased, and in order to ensure an appropriate viscosity on the browned surface, more preferably, the starch can be blended in an amount of from 1 to 30% by weight based on the amount of the batter.

The protein which can be used in the batter is not particularly limited as long as it is an edible protein, however, for example, egg white, plasma powder, purified fish protein, purified soybean protein, erythrocyte powder, purified wheat protein, cell protein, milk protein, or gelatin can be used, preferably egg white, plasma powder, purified fish protein, purified soybean protein, or erythrocyte powder, each of which has adhesiveness, is used, and more preferably egg white is used. The protein is blended in an amount of from 0 to 20% by weight, preferably from 0.3 to 3% by weight based on the amount of the batter.

The seasoning which can be used in the batter is not particularly limited, however, a seasoning which facilitates the browning of the surface or a seasoning which provides a savory flavor when being baked can be used, and examples thereof include soy sauce, mirin (sweet sake), lactose, miso (fermented soybean paste), and Worcestershire sauce. The seasoning can be blended in an amount of from 0 to 30% by weight, preferably from 0.1 to 5% by weight based on the amount of the batter.

In the case where the batter is composed of at least water, a cooking oil, an emulsifier, a starch, and a protein, the blending ratio (weight ratio) of the constituent components can be set to 10 to 99% : 0 to 90% : 0.01 to 10% : 0 to 70% : 0 to 20%, preferably 30 to 90% : 0 to 60% : 0.1 to 2% : 1 to 30% : 0.3 to 3%. In the case where the batter is composed of at least water, a cooking oil, an emulsifier, a starch, a protein, and a seasoning, the blending ratio (weight ratio) of the constituent components can be set to 10 to 99% : 0 to 90% : 0.01 to 10% : 0 to 70% : 0 to 20% : 0 to 30%, preferably 30 to 90% : 0 to 60% : 0.1 to 2% : 1 to 30% : 0.3 to 3% : 0.1 to 5%.

The frozen gyoza of the invention may be produced by performing quick-freezing after browning a surface. The quick-freezing may be performed using, for example, a spiral freezer. The produced frozen gyoza is preferably stored at -5°C or lower, and from the viewpoint of prevention of decrease in quality, it is preferably stored at -18°C or lower.

Also, the refrigerated gyoza of the invention may be produced by performing quick-refrigeration after browning a surface. The quick-refrigeration can be performed using, for example, a vacuum refrigerating machine, an air-cooled refrigerating machine, or a water-cooled refrigerating machine. The quick-refrigeration may also be performed by refrigeration to 10°C or lower according to a conventional method. The produced refrigerated gyoza is preferably stored at 5°C or lower.

### Frozen Gyoza and Refrigerated Gyoza with Browning Agent

According to the invention, frozen or refrigerated gyoza with a browning agent, obtainable by the production method of the invention and characterized in that the number of connection points in a net-like structure per unit area (mm²) (a structure value A) of a browning agent when the thickness of a section of the browning agent is set to 20 µm is from 20 to 90, and the sum of the lengths of center lines of structural bodies of the net-like structure per unit area (mm²) (a structure value B) of the browning agent when the thickness of a section of the browning agent is set to 20 µm is 30 mm or less, is provided. The frozen or refrigerated gyoza with a browning agent of the invention is unprecedented frozen or refrigerated gyoza with a browning agent having a high quality in the points that burnt debris generated when cooking the gyoza by steam-baking is reduced, the occurrence of an unbaked portion of the browning agent is prevented, and also a browned surface with a favorable texture is formed when cooking the gyoza by steam-baking.

In the frozen or refrigerated gyoza of the invention, the structure value A of the browning agent when the thickness of a section of the browning agent is set to 20 µm is preferably in a range of from 20 to 80, more preferably from 22 to 70, and/or the structure value B of the browning agent when the thickness of a section of the browning agent is set to 20 µm is preferably in a range of from 5 to 30, more preferably from 8 to 30. The measurement of the structure values A and B of the net-like structure can be performed according to the measurement method described with respect to the production method of the invention.

### [Examples]

### Example 1: Relationship among Composition of Browning Agent and Quality of Gyoza and Structure of Browned Surface

In this Example, an examination was made as to how the occurrence of an unbaked portion of the browning agent, the generation of burnt debris, and the texture of gyoza varied when frozen gyoza with a browning agent prepared using an emulsified batter (provided that a batter was used in an experimental group 3) having a different composition was cooked. Further, in order to examine the association between the quality of gyoza and the browning agent, a frozen section of the browning agent was observed with a microscope, and the structure thereof was analyzed.

### (1) Composition of Browning Agent

In the browning agent, the ingredients of the composition shown in each of the experimental groups 1 to 10 in Table 1 were used.

**[Table 1]**

| | Water | Salad oil | MT01HH*¹ | Lighter-colored soy sauce | Egg white powder | Casein sodium salt | Lecithin |
|---|---|---|---|---|---|---|---|
| Experimental group 1 | 746.8 | 186.7 | 10 | 32.4 | 4 | 11.9 | 8.2 |
| Experimental group 2 | 186.7 | 746.8 | 10 | 32.4 | 4 | 11.9 | 8.2 |
| Experimental group 3 | 893.5 | 0 | 50 | 32.4 | 4 | 11.9 | 8.2 |
| Experimental group 4 | 357.4 | 536.1 | 50 | 32.4 | 4 | 11.9 | 8.2 |
| Experimental group 5 | 506.1 | 337.4 | 100 | 32.4 | 4 | 11.9 | 8.2 |
| Experimental group 6 | 168.7 | 674.8 | 100 | 32.4 | 4 | 11.9 | 8.2 |
| Experimental group 7 | 674.8 | 168.7 | 100 | 32.4 | 4 | 11.9 | 8.2 |
| Experimental group 8 | 297.4 | 446.1 | 200 | 32.4 | 4 | 11.9 | 8.2 |
| Experimental group 9 | 514.8 | 128.7 | 300 | 32.4 | 4 | 11.9 | 8.2 |
| Experimental group 10 | 386.1 | 257.4 | 300 | 32.4 | 4 | 11.9 | 8.2 |

| | | | | | | | |
|---|---|---|---|---|---|---|---|
| *1: tapioca starch acetate, manufactured by Nihon Shokuhin Kako Co., Ltd. (unit: g) | | | | | | | |

### (2) Preparation of Gyoza with Browning Agent

The ingredients of the composition shown in Table 1 were stirred at 6400 rpm for 4 minutes using ULTRA-TURRAX T50 Basic (manufactured by IKA-Werke GmbH & Co. KG), whereby an emulsified batter liquid (a browning agent liquid) was obtained. The obtained emulsified batter liquid was poured in a tray for gyoza in an amount of 2 g per gyoza dumpling. In this tray, meat gyoza (manufactured by Ajinomoto Frozen Foods Co., Inc.) was placed, and steam-heating was performed at 90°C for 9 minutes. Then, the steamed gyoza was quickly frozen immediately thereafter, whereby frozen gyoza with a browning agent was prepared.

### (3) Evaluation of Steam-Heating and Sensory Evaluation

In order to evaluate the quality of gyoza, the frozen gyoza obtained in the above (2) was arranged on a hot plate set at 240°C. Then, a lid was put on the plate and the gyoza was steam-baked for 4 minutes. After completion of steam-baking, in order to evaluate the degree of baking, (evaluation of steam-baking), the "amount of an unbaked portion of the browning agent" and the "amount of burnt debris of the browning agent" remaining on the hot plate were evaluated. Further, a sensory evaluation for the "texture when eating" was also performed. The evaluation criteria of each evaluation item were set as shown in Table 2. The scores in Table 2 were set stepwise in each evaluation item such that 5 is the best score and as the score decreases and approaches 1, the rating decreases.

**[Table 2]**

| Amount of unbaked portion of emulsified batter | Amount of burnt debris of emulsified batter | Texture when eating |
|---|---|---|
| 5: No unbaked portion occurs. | 5: No burnt debris is generated. | 5: Gyoza has an excellent crisp texture. |
| 4: A slight unbaked portion occurs but is not bothersome. | 4: Slight burnt debris is generated but is not bothersome. | 4: Gyoza has a good crisp texture. |
| 3: An unbaked portion is slightly bothersome. | 3: Burnt debris is slightly bothersome. | 3: Gyoza has a crisp texture but the texture is not good. |
| 2: Unbaked portions are connected and bothersome. | 2: Burnt debris is bothersome. | 2: Gyoza has a weak crisp texture and the texture is unfavorable. |
| 1: The batter is not baked. | 1: Too much burnt debris is generated. | 1: Gyoza has no crisp texture and the texture disinclines you to eat. |

### (4) Preparation of Frozen Section of Browning Agent

In order to observe the structure of the browning agent using a microscope, the browning agent of the gyoza after the steam-heating treatment obtained in the above (2) was frozen, cut into a section with a size of 1 cm x 1 cm, and then, fixed for 24 hours in a Ufix solution (manufactured by Sakura Finetek Co., Ltd.) at -25°C. Then, the fixed browning agent was degreased by being immersed in 100% hexane at -25°C for 18 hours. Thereafter, the degreased browning agent was added to a solution containing 10% sucrose and a 1% iodine solution at 4°C and immersed therein for 18 hours, so that the replacement of the sugar solution in the browning agent and the staining of the starch therein were performed. In order to allow the replacement of the sugar solution to further proceed, the browning agent was immersed in a solution containing 15% sucrose and a 1% iodine solution at 4°C for 8 hours, and then, immersed in a 20% sucrose solution at 4°C for 18 hours. Finally, the browning agent was embedded in 4% carboxymethyl cellulose and frozen at -25°C, and then, a frozen section with a thickness of 20 µm was prepared using a microtome.

### (5) Observation and Image Analysis of Frozen Section

The frozen section of the browning agent prepared in the above (4) was air-dried on a slide glass. The frozen section was observed using a light microscope (at a magnification of 40 times), and an image thereof was taken. The image analysis of the frozen section was performed using 3D-BON trabecular bone structure analysis software (manufactured by Ratoc System Engineering Co., Ltd.) and applying 2-D bone analysis of the trabecular bone structure analysis according to a given manual. Specifically, first, the obtained image was subjected to Binarize Auto LW, followed by fine adjustment, thereby binarizing the image. Then, the noise was removed from the structure portion of the browning agent under the conditions of "2D Ero" → "Ers Sml 50 µm" → "2D Dil". By using the above-described software, the frozen section of the browning agent was analyzed under the conditions of NdNd effective length (1.500 x thickness) and NdTm effective length (2.000 x thickness), and the following parameters were evaluated as the indices of the structure of the browned surface of gyoza.

Structure value A: the number (points/mm²) of connection points (bonding points) in the net-like structure per unit area (mm²)
Structure value B: the sum (mm/mm²) of the lengths of center lines of structural bodies of the net-like structure per unit area (mm²)
An average (n=3) of each structure value was obtained and used as the structure value of each browning agent.

Incidentally, it was confirmed that the net-like structure observed in the frozen section was mainly composed of a starch and a protein (data omitted).

### (6) Results

The results of the evaluation of steam-baking, the sensory evaluation, and the image analysis of the structure of the browned surface were as shown in Table 3. (experimental groups 1, 4 and 5 according to the invention whereas experimental groups 2, 3 and 6 to 10 are not part of the invention)

**[Table 3]**

| | Structure value A | Structure value B | Unbaked portion | Burnt debris | Texture |
|---|---|---|---|---|---|
| Experimental group 1 | 30.68 | 20.68 | 5 | 4 | 4 |
| Experimental group 2 | 3.27 | 48.67 | 5 | 5 | 2 |
| Experimental group 3 | 10.72 | 10.54 | 5 | 5 | 2 |
| Experimental group 4 | 25.26 | 16.33 | 5 | 5 | 5 |
| Experimental group 5 | 24.25 | 25.08 | 5 | 5 | 5 |
| Experimental group 6 | 10.42 | 34.60 | 4 | 3 | 4 |
| Experimental group 7 | 10.28 | 30.90 | 5 | 4 | 2 |
| Experimental group 8 | 17.59 | 32.42 | 2 | 5 | 1 |
| Experimental group 9 | 18.72. | 42.90 | 1 | 5 | 1 |
| Experimental group 10 | 20.20 | 35.17 | 1 | 5 | 1 |

As shown in Table 3, in the case where the structure value A of the frozen section of the browning agent was 20 or less (the experimental groups 2, 3, and 6 to 9) or the structure value B was 30 or more (the experimental groups 2, and 6 to 10), a tendency was observed that either of the result of evaluation of steam-baking and the result of sensory evaluation of texture was 3 or less, and in the case where the structure value A was 20 or more and the structure value B was 30 or less (the experimental groups 1, 4, and 5), for both of the evaluation of steam-baking and the sensory evaluation, a high score of 4 or more was obtained and the quality of gyoza was high.

### Example 2: Relationship among Type of Starch to be Used in Browning Agent and Quality of Gyoza and Structure of Browned Surface

In this Example, the preparation of frozen gyoza with a browning agent, the evaluation of steam-baking, the sensory evaluation, the preparation of a frozen section of the browning agent, and the observation and image analysis of the frozen section were performed using the same compositions and methods as in Example 1 except that Roadster (manufactured by Nihon Shokuhin Kako Co., Ltd.), which is a hygrothermally treated high-amylose corn starch, was used as the starch in the browning agent.

The results of the evaluation of steam-baking, the sensory evaluation, and the image analysis of the structure of the browned surface when using Roadster as the starch in the browning agent were as shown in Table 4. (experimental groups 11, 13-15,17 according to the invention whereas experimental groups 12, 16 and 18 to 20 are not part of the invention)

**[Table 4]**

| | Structure value A | Structure value B | Unbaked portion | Burnt debris | Texture |
|---|---|---|---|---|---|
| Experimental group 11 | 37.73 | 13.68 | 5 | 4 | 4 |
| Experimental group 12 | 22.87 | 33.12 | 5 | 3 | 4 |
| Experimental group 13 | 32.88 | 13.84 | 5 | 4 | 4 |
| Experimental group 14 | 32.10 | 22.00 | 4 | 4 | 4 |
| Experimental group 15 | 22.62 | 28.90 | 4 | 4 | 5 |
| Experimental group 16 | 7.95 | 25.88 | 4 | 2 | 4 |
| Experimental group 17 | 47.10 | 19.08 | 5 | 5 | 4 |
| Experimental group 18 | 38.21 | 33.17 | 2 | 4 | 2 |
| Experimental group 19 | 26.90 | 32.67 | 1 | 5 | 1 |
| Experimental group 20 | 10.42 | 20.54 | 1 | 5 | 1 |

As shown in Table 4, even when the starch was changed, in the case where the structure value A of the frozen section of the browning agent was 20 or less (the experimental groups 16 and 20) or the structure value B was 30 or more (the experimental groups 12, 18, and 19), a tendency was observed that either of the result of evaluation of steam-baking and the result of sensory evaluation was 3 or less, and in the case where the structure value A was 20 or more and the structure value B was 30 or less (the experimental groups 11, 13 to 15, and 17), for both of the evaluation of steam-baking and the sensory evaluation, a high score of 4 or more was obtained.

As described above, according to Examples 1 and 2, an apparent correlation between the structure values A and B of the frozen section of the browning agent and the evaluation of steam-baking and the sensory evaluation was observed, and it was shown that in the case where the structure value A was 20 or more and the structure value B was 30 or less, high evaluation results were obtained for both evaluation items, and the quality of gyoza was improved. Further, a tendency of correlation between the structure of the browning agent and the evaluation of steam-baking and the sensory evaluation did not depend on the type of starch to be used in the browning agent.

However, it was shown that depending on the type of starch to be used in the browning agent, an effect was observed on the evaluation of steam-baking, the sensory evaluation, or the structure of the browned surface (for example, the experimental groups 3 and 13 or the experimental groups 7 and 17).

### Example 3: Relationship among Type of Starch to be Used in Browning Agent and Quality of Gyoza and Structure of Browned Surface

In this Example, an examination was made as to how the occurrence of an unbaked portion of the browning agent, the generation of burnt debris, and the texture of gyoza varied depending on the relationship with the structure values A and B when gyoza was produced using a browning agent prepared using a different starch and the thus produced gyoza was cooked. Specifically, in this Example, the preparation of frozen gyoza with a browning agent, the evaluation of steam-baking, the sensory evaluation, the preparation of a frozen section of the browning agent, and the observation and image analysis of the frozen section were performed in the same manner as in Example 1 except that the composition of the browning agent and the type of starch to be used in the browning agent were changed. In the browning agent of this Example, the ingredients shown in each of the experimental groups in Table 5 were used, and the starches used in the browning agent were as shown in Table 6.

**[Table 5]**

| Water | Salad oil | Starch | Lighter-colo red soy sauce | Egg white powder | Casein sodium salt | Lecithin |
|---|---|---|---|---|---|---|
| 357.4 | 536.1 | 50 | 32.4 | 4 | 11.9 | 8.2 |

| | | | | | | |
|---|---|---|---|---|---|---|
| (unit: g) | | | | | | |

**[Table 6]**

| | |
|---|---|
| Experimental group 21 | MD starch (waxy corn starch, manufactured by Nihon Shokuhin Kako Co., Ltd.) |
| Experimental group 22 | Corn starch (manufactured by Nihon Shokuhin Kako Co., Ltd.) |
| Experimental group 23 | Non-glutinous rice flour (manufactured by Gunmaseifun Flour Millinq Co., Ltd.) |
| Experimental group 24 | Stabilose K (oxidized starch, manufactured by Matsutani Chemical Industry Co., Ltd.) |
| Experimental group 25 | Potato starch (manufactured by Matsutani Chemical Industry Co., Ltd.) |

The results of the evaluation of steam-baking, the sensory evaluation, and the image analysis of the structure of the browned surface were as shown in Table 7. (experimental groups 21, 23 to 25 according to the invention whereas experimental group 22 is not part of the invention)

**[Table 7]**

| | Structure value A | Structure value B | Unbaked portion | Burnt debris | Texture |
|---|---|---|---|---|---|
| Experimental group 21 | 35.17 | 14.61 | 5 | 4 | 4 |
| Experimental group 22 | 8.92 | 12.45 | 5 | 3 | 4 |
| Experimental group 23 | 57.30 | 28.29 | 4 | 5 | 5 |
| Experimental group 24 | 25.06 | 25.17 | 5 | 4 | 4 |
| Experimental group 25 | 33.70 | 12.15 | 5 | 4 | 4 |

As shown in Table 7, in all the experimental groups except for the experimental group 22, the structure value A was 20 or more and the structure value B was 30 or less, and for both of the evaluation of steam-baking and the sensory evaluation, a high score of 4 or more was obtained. Meanwhile, in the experimental group 22, the structure value A was 20 or less, and the score of the evaluation of steam-baking resulted in 3 or less.

### Example 4: Effect of Method for Preparing Browning Agent on Quality of Gyoza

In this Example, an effect of a method for preparing the browning agent on the quality of gyoza was examined. Specifically, in this Example, the preparation of frozen gyoza with a browning agent, the evaluation of steam-baking, the sensory evaluation, the preparation of a frozen section of the browning agent, and the observation and image analysis of the frozen section were performed in the same manner as in Example 1 except that the composition of the browning agent and the stirring conditions were changed.

In the browning agent of this Example, the ingredients shown in each of the experimental groups in Table 8 were used, and the stirring conditions when preparing the browning agent were set as shown in Table 8. In this Example, the stirring of the ingredients of the browning agent was performed using ULTRA-TURRAX T50 Basic (manufactured by IKA-Werke GmbH & Co. KG), and the stirring conditions were set in two ways: "strong" (10,000 rpm, 5 minutes) and "medium" (6,400 rpm, 4 minutes).

**[Table 8]**

| | Water | Salad oil | Roadster | Lighter-col ored soy sauce | Egg white powder | Casein sodium salt | Lecithin | Stirring conditions |
|---|---|---|---|---|---|---|---|---|
| Experimental group 26 | 337.4 | 506.1 | 100 | 32.4 | 4 | 11.9 | 8.2 | Medium |
| Experimental group 27 | 337.4 | 506.1 | 100 | 32.4 | 4 | 11.9 | 8.2 | Strong |

| | Water | Salad oil | Rice flour *2 | Lighter-col ored soy sauce | Egg white powder | Casein sodium salt | Lecithin | Stirring conditions |
|---|---|---|---|---|---|---|---|---|
| Experimental group 28 | 373.4 | 560.1 | 10 | 32.4 | 4 | 11.9 | 8.2 | Medium |
| Experimental group 29 | 373.4 | 560.1 | 10 | 32.4 | 4 | 11.9 | 8.2 | Strong |

| | Water | Salad oil | Rice flour *2 | Lighter-col ored soy sauce | Egg white powder | Casein sodium salt | Lecithin | Stirring conditions |
|---|---|---|---|---|---|---|---|---|
| Experimental group 23 | 357.4 | 536.1 | 50 | 32.4 | 4 | 11.9 | 8.2 | Medium |
| Experimental group 30 | 357.4 | 536.1 | 50 | 32.4 | 4 | 11.9 | 8.2 | Strong |

| | | | | | | | | |
|---|---|---|---|---|---|---|---|---|
| *2: non-glutinous rice flour (unit: g) | | | | | | | | |

The results of the evaluation of steam-baking, the sensory evaluation, and the image analysis were as shown in Table 9. (experimental groups 27, 29 and 23 according to the invention whereas experimental groups 26, 28 and 30 are not part of the invention)

**[Table 9]**

| | Structure value A | Structure value B | Unbaked portion | Burnt debris | Texture |
|---|---|---|---|---|---|
| Experimental group 26 | 19.78 | 7.74 | 4 | 3 | 3 |
| Experimental group 27 | 29.77 | 10.83 | 4 | 4 | 4 |
| Experimental group 28 | 15.42 | 5.58 | 5 | 3 | 4 |
| Experimental group 29 | 67.35 | 18.92 | 5 | 4 | 4 |
| Experimental group 23 | 57.30 | 28.29 | 4 | 5 | 5 |
| Experimental group 30 | 96.26 | 23.73 | 3 | 4 | 3 |

As shown in Table 9, it was found that when the stirring conditions at the time of mixing the ingredients of the browning agent were changed, the structure value A was significantly changed. Specifically, it was found that by increasing the stirring intensity, the structure value A tended to be increased, in other words, the number of connection points (bonding points) of the net-like structure of the browning agent tended to be increased. For example, by comparing Fig. 2A (the experimental group 26) and Fig. 2B (the experimental group 27), it is found that in the experimental group 27, the structure value A is significantly increased by increasing the stirring intensity. Further, by comparing Fig. 2C (the experimental group 30) and Fig. 2D (the experimental group 23), it is found that in the experimental group 23, the structure value A is significantly decreased by decreasing the stirring intensity. In addition, in the same manner as in Examples 1 to 3, in the case where the structure value A was 20 or less (the experimental groups 26 and 28), a score of 3 or less was obtained for either of the evaluation of baking and the sensory evaluation. Further, also in the case where the structure value A was increased and exceeded 90 (the experimental group 30), an adverse effect was observed on the evaluation of baking and the sensory evaluation. From these results, it was found that the structure value A can be increased by increasing the stirring intensity, and the structure value A is preferably 90 or less.

From these results, it was found that the structure value A of the frozen section of the browning agent is preferably 20 or more and 90 or less, and the structure value B is preferably 30 or less.

### Example 5: Effect of Production Conditions for Gyoza on Quality of Gyoza

In this Example, an examination was made as to what factor had an effect on the quality of gyoza other than the composition of the browning agent.

Specifically, in this Example, the preparation of frozen gyoza with a browning agent, the evaluation of steam-baking, the sensory evaluation, the preparation of a frozen section of the browning agent, and the observation and image analysis of the frozen section were performed in the same manner as in Example 3 except that the experimental group 22 in Example 3 was used as a control, and the stirring conditions for the browning agent and the steaming conditions for gyoza were changed.

In this Example, the stirring conditions for the browning agent and the steaming conditions for gyoza were set as shown in Table 10. The stirring of the ingredients of the browning agent was performed using ULTRA-TURRAX T50 Basic (manufactured by IKA-Werke GmbH & Co. KG), and the mixing by hand was performed using a whisk.

**[Table 10]**

| | Stirring conditions | Steaming conditions |
|---|---|---|
| Experimental group 22 | 6,400 rpm, 4 minutes | 90°C, 9 minutes |
| Experimental group 31 | Mixing by hand (whisk), 3 minutes | 65°C, 5 minutes |
| Experimental group 32 | 10,000 rpm, 5 minutes | 95°C, 15 minutes |

The results of the evaluation of steam-baking, the sensory evaluation, and the image analysis were as shown in Table 11 (experimental groups 31 and 32 according to the invention whereas experimental group 22 is not part of the invention)

**[Table 11]**

| | Structure value A | Structure value B | Unbaked portion | Burnt debris | Texture |
|---|---|---|---|---|---|
| Experimental group 22 | 8.92 | 12.45 | 5 | 3 | 4 |
| Experimental group 31 | 25.78 | 9.75 | 5 | 4 | 5 |
| Experimental group 32 | 30.72 | 11.18 | 4 | 4 | 4 |

As shown in Table 11, in the experimental group 31, the stirring intensity was lower than in the experimental group 22 (under the conditions that the structure value A was decreased), however, since the steaming conditions were set to low, the structure value A was increased to 20 or more. In addition, the amount of burnt debris, which was not favorable in the experimental group 22, was decreased in the experimental group 31, and a score of 4 or more was obtained for both of the evaluation of steam-baking and the sensory evaluation. From these results, it was found that by setting the steaming conditions for gyoza to low, the structure value A of the browning agent after steam-baking was increased. Further, in the experimental group 32, the stirring intensity was higher than in the experimental group 22 (under the conditions that the structure value A was increased), however, by using the steaming conditions which were set to higher than in the experimental group 22 (under the conditions that the structure value A was decreased), the structure values A and B of the structure of the browned surface of gyoza were adjusted so that the structure value A was 20 or more and 90 or less and the structure value B was 30 or less. As a result, in the experimental group 32, a score of 4 or more was obtained for both of the evaluation of steam-baking and the sensory evaluation.

In this manner, by changing the production conditions such as the stirring conditions for the browning agent or the steam-heating conditions for gyoza, it was possible to prepare gyoza such that the structure value A of the frozen section of the browning agent was 20 or more and 90 or less and the structure value B was 30 or less, and the quality of the obtained gyoza could be improved.

### Example 6: Other Production Conditions that Affect Structure of Browning Agent

In this Example, an effect of the ratio of water to oil to be used as the ingredients of the browning agent and an effect of the temperature when mixing the ingredients on the structure of the browning agent were examined.

In this Example, frozen gyoza with a browning agent was prepared in the same manner as in Example 1 except that the composition of the browning agent was changed as shown in Table 12 (an experimental group 33). Further, the preparation of a frozen section of the browning agent and the observation and image analysis of the frozen section were performed in the same manner as in Example 1. The structure of the browning agent of the obtained gyoza was analyzed, and it was found that the structure value A was 27.66 and the structure value B was 13.35.

**[Table 12]**

| | Water | Salad oil | Non-glutin ous rice flour | Lighter-col ored soy sauce | Egg white powder | Casein sodium salt | Lecithin |
|---|---|---|---|---|---|---|---|
| Experimental group 33 | 357.4 | 536.1 | 50 | 32.4 | 4 | 11.9 | 8.2 |

| | | | | | | | |
|---|---|---|---|---|---|---|---|
| (unit: g) | | | | | | | |

The preparation of frozen gyoza with a browning agent, the preparation of a frozen section of the browning agent, and the observation and image analysis of the frozen section were performed in the same manner as in the experimental group 33, however, an examination was made as to how the structure values A and B of the frozen section of the browning agent of the obtained frozen gyoza varied in the case where only the stirring conditions when preparing the browning agent was changed (Figs. 3A and 3B), in the case where only the steam-heating time for gyoza was changed (Figs. 3C and 3D), in the case where only the steam-heating temperature for gyoza was changed (Figs. 3E and 3F), in the case where only the ratio of water to oil in the browning agent was changed (Figs. 3G and 3H), or in the case where only the temperature when mixing the ingredients of the browning agent was changed (Figs. 3I and 3J). The tendencies of the variations are shown in Figs. 3A to 3J.

It was found that when the stirring intensity was increased, both of the structure values A and B tended to be increased, and when the stirring intensity was decreased, both of the structure values A and B tended to be decreased (Figs. 3A and 3B).

Further, it was found that when the steam-heating time for gyoza was increased, the structure value A was decreased but the structure value B was increased, and when the steam-heating time for gyoza was decreased, the structure value A was increased but the structure value B was decreased (Figs. 3C and 3D).

Further, it was found that when the steam-heating temperature for gyoza was increased, both of the structure values A and B tended to be increased, and when the steam-heating temperature for gyoza was decreased, both of the structure values A and B tended to be decreased (Figs. 3E and 3F).

Still further, it was found that when the ratio of water to oil in the browning agent was increased, both of the structure values A and B tended to be increased, and when the ratio of water to oil in the browning agent was decreased, the structure value A tended to be decreased but the structure value B tended to be increased (Figs. 3G and 3H).

Still further, it was found that when the temperature at the time of mixing the ingredients of the browning agent was increased, the structure value A tended to be decreased but the structure value B tended to be increased, and when the temperature at the time of mixing the ingredients of the browning agent was decreased, both of the structure values A and B tended to be decreased (Figs. 3I and 3J).

In this manner, in the invention, by changing the composition of the browning agent or the production conditions for the browning agent, and/or by changing the production conditions for gyoza, the structure of the frozen section of the browning agent can be controlled, and as a result, the quality of gyoza can be improved.

Accordingly, from the results of this Example, it was found that in the case where the structure values A and B of the frozen section of the browning agent do not satisfy the predetermined conditions, by taking the measures shown in Fig. 4 so as to adjust the structure values A and B, the quality of gyoza can be improved.

## Claims

1. A method for producing frozen or refrigerated gyoza with a browning agent, **characterized in that** a browning agent is prepared using the number of connection points in the net-like structure per unit area (mm²) (a structure value A) of the browning agent and the sum of the lengths of center lines of structural bodies of the net-like structure per unit area (mm²) (a structure value B) of the browning agent as indices, wherein the browning agent is prepared such that the structure value A of the browning agent when the thickness of a section of the browning agent is set to 20 µm is from 20 to 90 (points/mm²) and the structure value B of the browning agent when the thickness of a section of the browning agent is set to 20 µm is 30 (mm/mm²) or less,
wherein the browning agent contains, based on the amount of the batter, 10 to 99% by weight of water, 0 to 90% by weight of oil, 0.01 to 10% by weight of emulsifier, and 0 to 70% by weight of starch, and 0 to 20% by weight of protein,
wherein the method comprises the steps of mixing the ingredients of a browning agent, steam-heating uncooked gyoza to which the browning agent has been attached and quickly freezing or refrigerating, respectively, the steam-heated product, and comprising adjusting the composition of the ingredients of the browning agent, the stirring intensity and the temperature when mixing the ingredients of the browning agent, the ratio of water and oil in the browning agent, the steam-heating time and steam-heating temperature for the gyoza to which the browning agent has been attached.

2. Frozen or refrigerated gyoza with a browning agent, obtainable by the production method according to claim 1, **characterized in that** the number of connection points in the net-like structure per unit area (mm²) (a structure value A) of the browning agent when the thickness of a section of the browning agent is set to 20 µm is from 20 to 90, and the sum of the lengths of center lines of structural bodies of the net-like structure per unit area (mm²) (a structure value B) of the browning agent when the thickness of a section of the browning agent is set to 20 µm is 30 mm or less.

## Patentansprüche

1. Verfahren zur Herstellung von gefrorenen oder gekühlten Gyoza mit einem Bräunungsmittel, **dadurch gekennzeichnet, dass** ein Bräunungsmittel unter Verwendung der Anzahl der Anschlusspunkte in der netzartigen Struktur pro Flächeneinheit (mm²) (Strukturwert A) des Bräunungsmittels und der Summe der Längen der Mittellinien von Strukturkörpern der netzartigen Struktur pro Flächeneinheit (mm²) (Strukturwert B) des Bräunungsmittels als Indices hergestellt wird, wobei das Bräunungsmittel so hergestellt ist, dass der Strukturwert A des Bräunungsmittels, wenn die Dicke eines Abschnitts des Bräunungsmittels auf 20 µm eingestellt ist, 20 bis 90 (Punkte/mm²) beträgt und der Strukturwert B des Bräunungsmittels, wenn die Dicke eines Abschnitts des Bräunungsmittels auf 20 µm eingestellt ist, 30 (mm/mm²) oder weniger beträgt,
wobei das Bräunungsmittel, bezogen auf die Menge des Teigs, 10 bis 99 Gew.-% Wasser, 0 bis 90 Gew.-% Öl, 0,01 bis 10 Gew.-% Emulgator und 0 bis 70 Gew.-% Stärke und 0 bis 20 Gew.-% Protein enthält,
wobei das Verfahren die Schritte des Mischens der Bestandteile eines Bräunungsmittels, des Dampferhitzens von ungekochten Gyoza, woran das Bräunungsmittel gebunden worden ist, und des schnellen Gefrierens bzw. Kühlens des dampferhitzten Produkts umfasst, und des Einstellens der Zusammensetzung der Bestandteile des Bräunungsmittels, der Rührintensität und der Temperatur beim Mischen der Bestandteile des Bräunungsmittels, des Verhältnisses von Wasser und Öl in dem Bräunungsmittel, der Dampferhitzungszeit und der Dampferhitzungstemperatur für die Gyoza, woran das Bräunungsmittel gebunden worden ist.

2. Gefrorene oder gekühlte Gyoza mit einem Bräunungsmittel, erhältlich durch das Herstellungsverfahren nach Anspruch 1, **dadurch gekennzeichnet, dass** die Anzahl der Anschlusspunkte in der netzartigen Struktur pro Flächeneinheit (mm²) (Strukturwert A) des Bräunungsmittels bei einer Einstellung der Dicke eines Abschnitts des Bräunungsmittels auf 20 µm 20 bis 90 beträgt, und die Summe der Längen der Mittellinien von Strukturkörpern der netzartigen Struktur pro Flächeneinheit (mm²) (Strukturwert B) des Bräunungsmittels, wenn die Dicke eines Abschnitts des Bräunungsmittels auf 20 µm eingestellt ist, 30 mm oder weniger beträgt.

## Revendications

1. Méthode de production de gyozas surgelés ou réfrigérés avec un agent de brunissement, **caractérisée en ce qu'**un agent de brunissement est préparé en utilisant le nombre de points de connexion dans la structure de type filet par unité de surface (mm²) (une valeur de structure A) de l'agent de brunissement et la somme des longueurs des lignes centrales des corps structuraux de la structure de type filet par unité de surface (mm²) (une valeur de structure B) de l'agent de brunissement en tant qu'indices, dans laquelle l'agent de brunissement est préparé de telle manière que la valeur de structure A de l'agent de brunissement lorsque l'épaisseur d'une section de l'agent de brunissement est fixée à 20 µm est de 20 à 90 (points/mm²) et la valeur de structure B de l'agent de brunissement lorsque l'épaisseur d'une section de l'agent de brunissement est fixée à 20 µm est de 30 (mm/mm²) ou moins,
dans laquelle l'agent de brunissement contient, sur la base de la quantité de la pâte, 10 à 99 % en poids d'eau, 0 à 90 % en poids d'huile, 0,01 à 10 % en poids d'émulsifiant, et 0 à 70 % en poids d'amidon, et 0 à 20 % en poids de protéine,
dans laquelle la méthode comprend les étapes de mélange des ingrédients d'un agent de brunissement, chauffage par la vapeur des gyozas non cuits sur lesquels l'agent de brunissement a été appliqué et surgélation rapide ou réfrigération rapide, respectivement, du produit chauffé par la vapeur, et comprenant l'ajustement de la composition des ingrédients de l'agent de brunissement, de l'intensité d'agitation et de la température lors du mélange des ingrédients de l'agent de brunissement, du rapport de l'eau et de l'huile dans l'agent de brunissement, du temps de chauffage par la vapeur et de la température de chauffage par la vapeur pour les gyozas sur lesquels l'agent de brunissement a été appliqué.

2. Gyozas surgelés ou réfrigérés avec un agent de brunissement, pouvant être obtenus par la méthode de production selon la revendication 1, **caractérisés en ce que** le nombre de points de connexion dans la structure de type filet par unité de surface (mm²) (une valeur de structure A) de l'agent de brunissement lorsque l'épaisseur d'une section de l'agent de brunissement est fixée à 20 µm est de 20 à 90, et la somme des longueurs des lignes centrales des corps structuraux de la structure de type filet par unité de surface (mm²) (une valeur de structure B) de l'agent de brunissement lorsque l'épaisseur d'une section de l'agent de brunissement est fixée à 20 µm est de 30 mm ou moins.
